# EUROPÄISCHE PATENTSCHRIFT

(11) **EP 3 491 237 B1**
(45) Veröffentlichungstag und Bekanntmachung des Hinweises auf die Patenterteilung: **12.05.2021**
(21) Anmeldenummer: 17739284.2
(22) Anmeldetag: 13.07.2017
(51) Int. Cl.: F03D 7/02, F16D 65/00, F03D 80/55, F16D 55/225, F16D 121/04

(54) **SCHEIBENBREMSE FÜR EINEN BREMSSCHEIBENRING EINES AZIMUTANTRIEBS EINER WINDKRAFTANLAGE**
DISK BRAKE FOR A BRAKE DISK RING OF AN AZIMUTH DRIVE OF A WIND POWER INSTALLATION
FREIN À DISQUE POUR UNE COURONNE D'UN ENTRAÎNEMENT AZIMUTAL D'UNE ÉOLIENNE

(30) Priorität: 27.07.2016 DE 102016213824
(43) Veröffentlichungstag der Anmeldung: 05.06.2019
(73) Patentinhaber: Stromag GmbH, 59425 Unna (DE)
(72) Erfinder: SPINK, Daniela, 59423 Unna (DE); MIKOLAJCZYK, Olaf, 59425 Unna (DE); FAUST, Friedrich, 59229 Ahlen (DE); BÖHM, Peter, 59423 Unna (DE)
(74) Vertreter: Patentanwälte Ruff, Wilhelm, Beier, Dauster & Partner mbB
(86) Internationale Anmeldenummer: PCT/EP2017/067760
(87) Internationale Veröffentlichungsnummer: WO 2018/019606

(56) Entgegenhaltungen:
- WO-A1-2014/187510
- CN-A- 102 493 917
- DE-A1-102008 008 437
- DE-B3-102012 202 438
- KR-B1- 101 464 598
- US-A1- 2012 080 276

## Beschreibung

Die Erfindung betrifft eine Scheibenbremse für einen Bremsscheibenring eines Azimutantriebs einer Windkraftanlage mit einem Bremsengehäuse, das zwei Gehäusehälften aufweist, die auf gegenüberliegenden Seiten ein Aufnahmemaul für den Bremsscheibenring flankieren, wobei in jeder Gehäusehälfte wenigstens zwei Bremskolben gelagert sind, die dem Aufnahmemaul zugeordnete Reibbelagträger hydraulisch beaufschlagen, wobei wenigstens eine Gehäusehälfte einen Reinigungskanal aufweist, der sich von einer Gehäuserückseite zu einem Gehäusefrontbereich erstreckt, in dem das Aufnahmemaul und die Reibbelagträger vorgesehen sind.

Die KR 101 464 598 B1 offenbart eine Scheibenbremse für einen Bremsscheibenring eines Azimutantriebs einer Windkraftanlage, die ein Bremsengehäuse aufweist, das mit zwei Gehäusehälften versehen ist, die auf gegenüberliegenden Seiten ein Aufnahmemaul für den Bremsscheibenring flankieren. Wie Fig. 3 und Fig. 5 der D6 entnehmbar ist, weist eine Gehäusehälfte einen Kanal auf, der sich von einer Gehäuserückseite bis zu einem Gehäusefrontbereich erstreckt, an dem das Aufnahmemaul des Bremsengehäuses beginnt.

Eine weitere Scheibenbremse ist aus der DE 10 2009 049 906 A1 bekannt. Die Windkraftanlage weist eine horizontal drehbare Kanzel auf, die mittels eines Azimutantriebs verdreht wird. Um die Kanzel in einer gewünschten Windrichtung zu blockieren, ist ein horizontal angeordneter Bremsscheibenring vorgesehen, der von einer Vielzahl von identisch zueinander gestalteten Scheibenbremsen hydraulisch beaufschlagt wird. Jede Scheibenbremse weist ein Bremsengehäuse auf, das für den Bremsscheibenring ein Aufnahmemaul bildet. Das Bremsengehäuse weist zwei Gehäusehälften auf, die in montiertem Zustand der Scheibenbremse den Bremsscheibenring ober- und unterseitig flankieren. In jeder Gehäusehälfte sind zwei Bremskolben angeordnet, die orthogonal zu einer entsprechenden Oberfläche des Bremsscheibenrings beweglich sind. Die Bremskolben beaufschlagen Reibbelagträger, die über entsprechende Reibbeläge mit den als Reibflächen dienenden Oberflächen des Bremsscheibenrings zusammenwirken, um den Bremsscheibenring abzubremsen oder freizugeben.

Aufgabe der Erfindung ist es, eine Scheibenbremse der eingangs genannten Art zu schaffen, die im Betrieb Geräuschbildungen reduzieren kann.

Diese Aufgabe wird durch die Merkmale des Anspruchs 1 gelöst. Die erfindungsgemäße Lösung nutzt die Erkenntnis, dass Quietschgeräusche bei der Verstellung einer Kanzel einer Windkraftanlage durch Bremsstaub im Bereich des Bremsscheibenrings entstehen, dessen Ursache Reibverschleiß der Reibbeläge der Scheibenbremse ist. Durch die erfindungsgemäße Lösung ist es möglich, von der Gehäuserückseite her mit entsprechenden Reinigungselementen in den Bereich des Aufnahmemauls und demzufolge in den Bereich der Reibbelagträger zu gelangen, um dort mittels der Reinigungselemente Bremsstaub zu entfernen. Durch die Möglichkeit einer Entfernung von Bremsstaub in einem Spaltbereich des Aufnahmemauls des Bremsengehäuses selbst ist es möglich, die Oberflächen des Bremsscheibenrings sauber zu halten und so eine Geräuschbildung im Betrieb der Scheibenbremse zu reduzieren. Der Reinigungskanal kann entweder lediglich in einer Gehäusehälfte oder aber in beiden Gehäusehälften ausgebildet sein. Der Reinigungskanal ist sowohl zur Gehäuserückseite als auch zum Gehäusefrontbereich hin, d.h. zum Aufnahmemaul, offen, so dass ein geeignetes Reinigungselement von einer Rückseite her positioniert oder hindurchgesteckt werden kann, um eine Reinigung im Gehäusefrontbereich, d.h. im Bereich der Reibbelagträger und des Aufnahmemauls, zu ermöglichen. Der Reinigungskanal stellt somit einen durch den aufeinanderliegenden Teil der Gehäusehälften des Bremsengehäuses hindurchgehenden Durchtritt dar. In besonders vorteilhafter Weise ist wenigstens eine obere Gehäusehälfte des Bremsengehäuses - auf einen montierten Betriebszustand der Scheibenbremse bezogen - mit dem Reinigungskanal versehen. Aufgrund der horizontalen Ausrichtung des Bremsscheibenrings bleibt insbesondere auf der Oberseite des Bremsscheibenrings pulverförmiger Reibverschleiß liegen, der durch das Reinigungselement entfernt werden kann. Der Reinigungskanal im Bereich der oberen Gehäusehälfte reicht aus, um für das Reinigungselement die Oberseite des Bremsscheibenrings zugänglich zu machen. Als Reinigungselement ist vorzugsweise ein Gebläse, ein Staubsauger oder eine mechanische Reinigungsbürste, insbesondere eine Flaschenbürste, vorgesehen. Entsprechender Abrieb, der sich zwischen Reibbelägen und entsprechenden Oberflächen des Bremsscheibenrings bildet, setzt sich bevorzugt zwischen den benachbarten Reibbelagträgern jeweils einer Gehäusehälfte ab. Dieser Abrieb wird beim Drehen des Bremsscheibenrings zwischen den entsprechenden Reibbelag und den Bremsscheibenring gedrückt, wodurch es zu einer Verglasung des Reibbelags kommen kann. Eine entsprechende Verglasung des Reibbelags führt zum einen zu einem unerwünschten Quietschen. Zum anderen verlieren derartige verglaste Reibbeläge ihre Reibeigenschaften und demzufolge ihre Bremseigenschaften, wodurch diese ausgetauscht werden müssen. Durch die erfindungsgemäße Lösung kann über den Reinigungskanal der Abrieb im Bereich des Aufnahmemauls und insbesondere zwischen den benachbarten Reibbelagträgern entfernt werden, wodurch eine Verglasung der Reibbeläge vermieden werden kann. Vorteilhaft ist der Reinigungskanal so dimensioniert, dass von der Gehäuserückseite aus das Aufnahmemaul des Bremsengehäuses im Bereich der oberen und der unteren Reibbelagträger für ein entsprechendes Reinigungselement zugänglich ist. Erfindungsgemäß setzt der Reinigungskanal sich im Bereich des Aufnahmemauls fort in eine Reinigungsnut, die offen zu einer Gehäusefrontseite hin ist. Dadurch ist es möglich, von der Gehäuserückseite her mittels einer entsprechenden Reinigungsbürste den Abrieb, der sich zwischen den Reibbelagträgern im Bereich des Mittelstegs und damit im Bereich des Aufnahmemauls angesammelt hat, zur Gehäusefrontseite hin herauszufördern, insbesondere herauszuschieben. Dabei wird die Reinigungsbürste von hinten durch den Reinigungskanal hindurchgeführt und dann im Bereich des Aufnahmemauls hin und her bewegt. Alternativ oder ergänzend wird mittels eines Druck- oder Sauggebläses, das rückseitig an einer offenen Stirnseite des Reinigungskanals angesetzt wird, ein Saug- oder Druckluftstrom erzeugt, der die gewünschte Staubentfernung bewirkt.

In Ausgestaltung der Erfindung ist der Reinigungskanal fluchtend zu wenigstens einem Mittelsteg zwischen jeweils zwei benachbarten Reibbelagträgern vorgesehen. Bei lediglich zwei benachbarten Reibbelagträgern ist ein einzelner Reinigungskanal im Bereich der entsprechenden Gehäusehälfte vorgesehen. Bei mehr als zwei Reibbelagträgern im Bereich jeder Gehäusehälfte ist eine entsprechend erhöhte Anzahl von Reinigungskanälen im Bereich der Mittelstege zwischen jeweils zwei benachbarten Reibbelagträgern vorgesehen.

In weiterer Ausgestaltung der Erfindung weist die Reinigungsnut in Richtung der Gehäusefrontseite eine Neigung relativ zu einer Horizontalebene auf, in der die Reibbelagträger angeordnet sind, wobei ein Boden der Reinigungsnut sich zur Gehäusefrontseite hin von der Horizontalebene entfernt. Dadurch wird ein Gefälle nach Art einer Rutsche gebildet, die ein weiter verbessertes Entfernen von Bremsstaub, d.h. von Abrieb, aus dem Bereich des Mittelstegs zwischen jeweils zwei Reibbelagträgern ermöglicht.

In weiterer Ausgestaltung der Erfindung vergrößert eine Querschnittsfläche der Reinigungsnut sich zur Gehäusefrontseite hin kontinuierlich. Eine Vergrößerung der Querschnittsfläche der Reinigungsnut wird insbesondere durch eine kontinuierliche Vergrößerung der Breite eines Bodens der Reinigungsnut zur Gehäusefrontseite hin erzielt, wodurch eine Rutschfunktion für in die Reinigungsnut gekehrten Abrieb weiter verbessert wird.

In weiterer Ausgestaltung der Erfindung ist die Reinigungsnut rinnenförmig ausgeführt. Mittels einer Reinigungsbürste kann demzufolge der sich zwischen den Reibbelagträgern ansammelnde Abrieb in die Reinigungsnut gekehrt und in einfacher Weise zur Gehäusefrontseite hin herausgekehrt werden.

In weiterer Ausgestaltung der Erfindung bilden beide Gehäusehälften gemeinsam den Reinigungskanal, und im Bereich des Aufnahmemauls ist in beiden Gehäusehälften jeweils eine Reinigungsnut vorgesehen. Der Reinigungskanal geht jeweils fluchtend in die entsprechende Reinigungsnut über.

In weiterer Ausgestaltung der Erfindung sind beide Reinigungsnuten spiegelsymmetrisch zu einer horizontalen Trennebene der Gehäusehälften gestaltet und mit jeweils einer Neigung versehen. Die Reinigungsnuten wie auch der wenigstens eine Reinigungskanal sind einstückig im Bremsengehäuse ausgeformt, insbesondere an den beiden Gehäusehälften.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch einen Ausschnitt einer Windkraftanlage im Bereich einer drehbaren Kanzel mit Ausführungsformen erfindungsgemäßer Scheibenbremsen,
- Fig. 2: schematisch in einer Draufsicht eine Hälfte eines Bremsscheibenrings mit mehreren Scheibenbremsen gemäß einer Ausführungsform der Erfindung,
- Fig. 3: in vergrößerter perspektivischer Darstellung eine Ausführungsform einer erfindungsgemäßen Scheibenbremse nach den Fig. 1 und 2,
- Fig. 4: eine untere Hälfte der Scheibenbremse nach Fig. 3 und
- Fig. 5: in perspektivischer Längsschnittdarstellung die untere Bremsenhälfte gemäß Fig. 4.

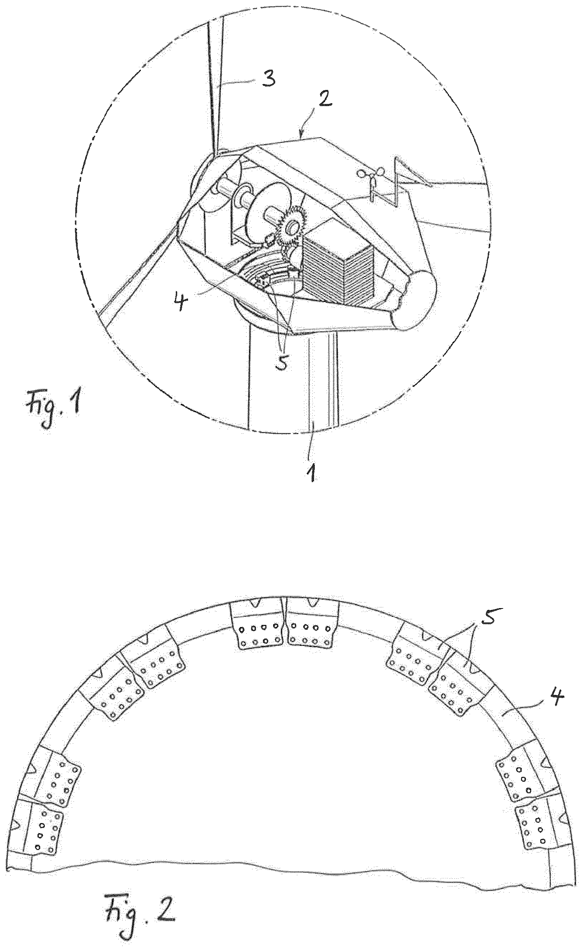

Eine Windkraftanlage gemäß Fig. 1 weist einen stationären Turm 1 auf, der auf einem Untergrund befestigt ist und von dem Untergrund aus vertikal nach oben abragt. An einem oberen Endbereich des Turms 1 ist eine Kanzel 2 um eine vertikale Mittellängsachse des Turms 1 drehbar gelagert. Die Kanzel 2 trägt einen Rotor 3, der im Inneren der Kanzel 2 über ein Getriebe einen elektrischen Generator beaufschlagt.

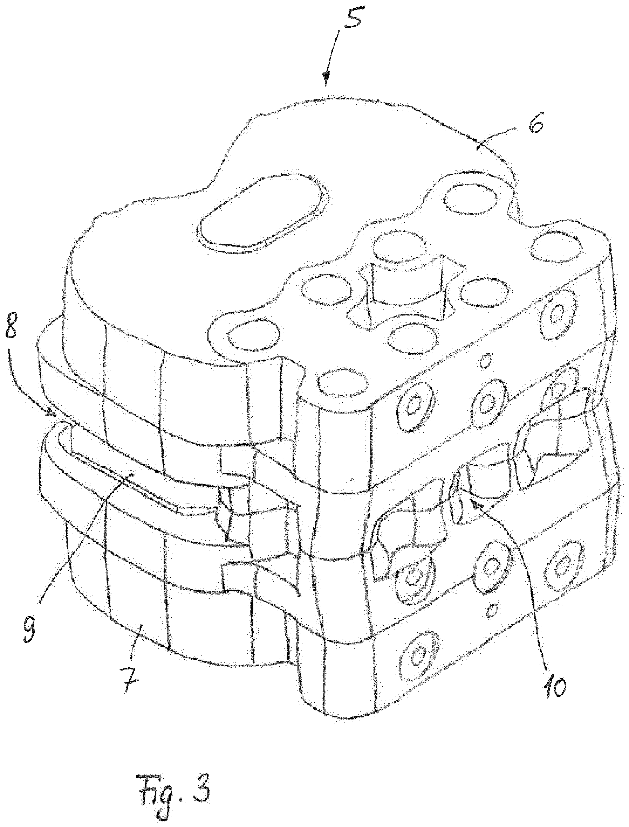

Die Verdrehung der Kanzel 2 erfolgt durch einen nicht näher dargestellten Azimutantrieb. Dabei wird die Kanzel 2 derart nach der entsprechenden Windrichtung ausgerichtet, dass der Rotor 3 immer in den Wind gerichtet ist. Zur Sicherung der jeweils eingestellten Drehstellung ist der Kanzel ein horizontal ausgerichteter Bremsscheibenring 4 zugeordnet, der drehfest mit der Kanzel 2 ist. An dem Bremsscheibenring 4 greift eine Vielzahl von Scheibenbremsen 5 an (Fig. 2), die über den Umfang des Bremsscheibenrings 4 verteilt angeordnet sind, und die stationär zu dem Turm 1 befestigt sind. Jede Scheibenbremse 5 ist hydraulisch betätigbar und weist gemäß den Fig. 3 bis 5 ein Bremsengehäuse auf, das aus zwei Gehäusehälften 6 und 7 zusammengesetzt ist. Die beiden Gehäusehälften 6 und 7 sind spiegelsymmetrisch zu einer mittigen Horizontalebene, im Übrigen jedoch identisch zueinander gestaltet. Beide Gehäusehälften 6 und 7 weisen einen Gehäuserückbereich auf, in dem die Gehäusehälften 6 und 7 aufeinanderliegen und über nicht dargestellte Schraubverbindungen fest miteinander verbunden sind. Beide Gehäusehälften 6 und 7 sind zudem in einem Gehäusefrontbereich unter Bildung eines Aufnahmemauls 8 zueinander beabstandet. Das Aufnahmemaul 8 bildet einen sich über die gesamte Breite des Bremsengehäuses in den Gehäusefrontbereich erstreckenden und zu drei Seiten hin offenen Spalt, durch den der Bremsscheibenring 4 hindurchgeführt ist. Die beiden Gehäusehälften 6 und 7 flankieren demzufolge den Bremsscheibenring 4 im Bereich seiner Oberseite und im Bereich seiner Unterseite parallel.

In beiden Gehäusehälften 6 und 7 sind jeweils zwei Bremskolben hubbeweglich gelagert, die im Bereich des Aufnahmemauls 8 auf jeweils einen Reibbelagträger 9 wirken, der in einem entsprechenden Aufnahmebereich der jeweiligen Gehäusehälfte 6, 7 geklemmt ist. Bei Druckbeaufschlagung durch einen zugeordneten Bremskolben werden die jeweiligen Reibbelagträger 9 gegen die entsprechende Oberfläche des Bremsscheibenrings gedrückt. Jeder Reibbelagträger 9 trägt in nicht näher dargestellter Weise jeweils einen Reibbelag. Die beiden Reibbelagträger 9 jeweils einer Gehäusehälfte 6, 7 werden paarweise durch das jeweilige Paar von Bremskolben synchron beaufschlagt. Die einander paarweise gegenüberliegenden Bremskolben in den beiden Gehäusehälften 6 und 7 sind gegenläufig zueinander synchron beweglich, so dass ein gleichzeitiges Pressen der Reibbeläge gegen die Oberseite und die Unterseite des Bremsscheibenrings 4 bei entsprechend hydraulischer Beaufschlagung der Scheibenbremse erfolgt. Zwischen den beiden Reibbelagträgern 9 einer Gehäusehälfte 6, 7 weist die entsprechende Gehäusehälfte 6, 7 einen Mittelsteg 12 auf, der die beiden Aufnahmeräume für die beiden Reibbelagträger 9 der jeweiligen Gehäusehälfte 6, 7 voneinander trennt.

Im Bereich einer horizontalen Trennebene der beiden Gehäusehälften 6, 7, die auch eine horizontale Mittelebene des Aufnahmemauls 8 bildet, liegen die beiden Gehäusehälften 6, 7 in ihrem Gehäuserückbereich aneinander an. Dieser Gehäuserückbereich ist mittig und fluchtend zu dem Mittelsteg 12 des Gehäusefrontbereichs mit einem Reinigungskanal 10 versehen, der sowohl nach vorne zum Aufnahmemaul 8 hin als auch nach hinten zu einer Gehäuserückseite hin offen ist. Der Reinigungskanal 10 wird durch jeweils einen offenen Kanalabschnitt in der jeweiligen Gehäusehälfte 6, 7 gebildet, wobei die offenen Kanalabschnitte spiegelsymmetrisch zu der Trennebene, im Übrigen jedoch identisch zueinander gestaltet sind. Durch das Aufeinanderliegen der beiden Gehäusehälften 6 und 7 im Gehäuserückbereich wird der geschlossene Reinigungskanal 10 gebildet, der einen rechteckigen freien Querschnitt aufweist.

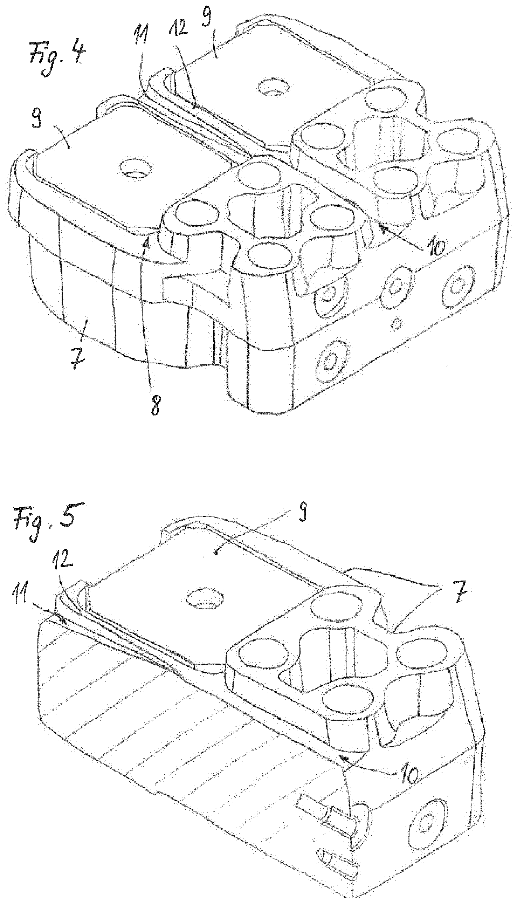

Im Bereich des Mittelstegs 12 zwischen den beiden Reibbelagträgern 9 im Gehäusefrontbereich ist zudem eine Reinigungsnut 11 in jeder Gehäusehälfte 6, 7 vorgesehen, die mit dem Reinigungskanal 10 fluchtet und zu einer Gehäusefrontseite hin, d.h. vom Reinigungskanal 10 weg, geneigt ist. Dabei ist die Reinigungsnut 11 im Bereich der unteren Gehäusehälfte 7 zur Gehäusefrontseite hin stetig abfallend gestaltet, wodurch sich die Funktion einer Rutsche ergibt. Die komplementäre Reinigungsnut im Bereich der oberen Gehäusehälfte 6 steigt relativ zur horizontalen Trennebene zur Gehäusefrontseite hin an, und zwar spiegelsymmetrisch zu der Neigung der Reinigungsnut 11 in der unteren Gehäusehälfte 7. Die Reinigungsnut 11 erweitert sich zudem zur Gehäusefrontseite hin zu beiden Seiten nach Art eines Trichters, wodurch sich auch der freie Querschnitt der Reinigungsnut 11 zwangsläufig zur Gehäusefrontseite hin vergrößert. Anhand der Fig. 4 und 5 ist erkennbar, dass die Reinigungsnut 11 rinnenartig mit einem Boden und zwei Seitenwandungen im Bereich des Mittelstegs 12 gebildet ist. Der Boden fällt zur Gehäusefrontseite hin kontinuierlich nach vorne ab, wodurch zwangsläufig die beiden Seitenwandungen zur Gehäusefrontseite immer höher werden. Denn der Mittelsteg 12 weist einen Randbereich auf, der parallel zu der horizontalen Trennebene verbleibt.

Sobald sich im Betrieb der Scheibenbremse 5 Bremsstaub, d.h. Abrieb, im Bereich des Aufnahmemauls 8 zwischen die Reibbelagträger 9, d.h. im Bereich des Mittelstegs 12, absetzt, kann mittels einer Reinigungsbürste, die von einer Gehäuserückseite in den Reinigungskanal 10 eingeführt und nach vorne zum Mittelsteg 12 hingeschoben wird, dieser Bremsstaub zur Gehäusefrontseite hin herausgeschoben oder herausgekehrt werden. Dabei wird der Bremsstaub in die Reinigungsnut 11 hineingeschoben. Da die Reinigungsnut 11 sich zur Gehäusefrontseite hin erweitert, ist ein äußerst einfaches Entfernen des Bremsstaubs zur Gehäusefrontseite hin ermöglicht.

Die entsprechende Reinigungsbürste ist derart dimensioniert, dass sie durch den Reinigungskanal 10 sowohl oberhalb als auch unterhalb des Bremsscheibenrings zu dem jeweiligen Mittelsteg 12 der oberen Gehäusehälfte 6 oder der unteren Gehäusehälfte 7 durch eine entsprechende Bedienperson manuell geschoben werden kann. Dadurch ist gewährleistet, dass entsprechender Abrieb sowohl im Bereich der oberen Gehäusehälfte 6 als auch im Bereich der unteren Gehäusehälfte 7 entfernt werden kann.

Sowohl der Reinigungskanal 10 als auch die Reinigungsnuten 11 sind in den beiden Gehäusehälften 6, 7 jeweils bei der Herstellung der Gehäusehälften einstückig mit ausgeformt. Vorzugsweise sind die entsprechenden Kanalabschnitte des Reinigungskanals 10 sowie die Reinigungsnuten 11 bereits in einem Gusswerkzeug zur Herstellung der Gehäusehälften 6, 7 vorgesehen, so dass die Kanalabschnitte für den Reinigungskanal 10 sowie die Reinigungsnuten 11 ohne zusätzliche spanende Bearbeitung direkt nach der Fertigstellung der Gehäusehälften 6 und 7 als Metallgussteile mit eingebracht sind.

## Patentansprüche

1. Scheibenbremse für einen Bremsscheibenring (4) eines Azimutantriebs einer Windkraftanlage mit einem Bremsengehäuse, das zwei Gehäusehälften (6, 7) aufweist, die auf gegenüberliegenden Seiten ein Aufnahmemaul (8) für den Bremsscheibenring (4) flankieren, wobei in jeder Gehäusehälfte (6, 7) wenigstens zwei Bremskolben gelagert sind, die dem Aufnahmemaul (8) zugeordnete Reibbelagträger (9) hydraulisch beaufschlagen, wobei wenigstens eine Gehäusehälfte (7) einen Reinigungskanal (10) aufweist, der sich von einer Gehäuserückseite zu einem Gehäusefrontbereich erstreckt, in dem das Aufnahmemaul (8) und die Reibbelagträger (9) vorgesehen sind, **dadurch gekennzeichnet, dass** der Reinigungskanal (10) sich im Bereich des Aufnahmemauls (8) fortsetzt in eine Reinigungsnut (11), die offen zu einer Gehäusefrontseite hin ist.

2. Scheibenbremse nach Anspruch 1, **dadurch gekennzeichnet, dass** der Reinigungskanal (10) fluchtend zu wenigstens einem Mittelsteg (12) zwischen jeweils zwei benachbarten Reibbelagträgern (9) vorgesehen ist.

3. Scheibenbremse nach Anspruch 1, **dadurch gekennzeichnet, dass** die Reinigungsnut (11) in Richtung der Gehäusefrontseite eine Neigung relativ zu einer Horizontalebene aufweist, in der die Reibbelagträger (9) angeordnet sind, wobei ein Boden der Reinigungsnut (11) sich zur Gehäusefrontseite hin von der Horizontalebene entfernt.

4. Scheibenbremse nach Anspruch 1 oder 3, **dadurch gekennzeichnet, dass** eine Querschnittsfläche der Reinigungsnut (11) sich zur Gehäusefrontseite hin kontinuierlich vergrößert.

5. Scheibenbremse nach einem der Ansprüche 1, 3 oder 4, **dadurch gekennzeichnet, dass** die Reinigungsnut (11) rinnenförmig ausgeführt ist.

6. Scheibenbremse nach einem der vorhergehenden Ansprüche, **dadurch gekennzeichnet, dass** beide Gehäusehälften (6, 7) gemeinsam den Reinigungskanal (10) bilden, und dass im Bereich des Aufnahmemauls (8) in beiden Gehäusehälften (6, 7) jeweils eine Reinigungsnut vorgesehen ist.

7. Scheibenbremse nach Anspruch 6, **dadurch gekennzeichnet, dass** beide Reinigungsnuten (11) spiegelsymmetrisch zu einer horizontalen Trennebene der Gehäusehälften (6, 7) gestaltet und mit jeweils einer Neigung versehen sind.

## Claims

1. Disk brake for a brake disk ring (4) of an azimuth drive of a wind power installation having a brake housing which comprises two housing halves (6, 7) which flank on opposite sides a receiving jaw (8) for the brake disk ring (4), wherein in each housing half (6, 7) at least two brake pistons are mounted, which hydraulically pressurize friction lining carriers (9) associated with the receiving jaw (8), wherein at least one housing half (7) includes a cleansing channel (10) which extends from a housing rear side to a housing front area, where the receiving jaw (8) and the friction lining carriers (9) are provided,
**characterized in that**
the cleansing channel (10), in the vicinity of the receiving jaw (8), is continued in a cleansing groove (11) which is open towards a housing front side.

2. Disk brake according to claim 1, **characterized in that** the cleansing channel (10) is provided in alignment with at least one centre bar (12) between each two adjacent friction lining carriers (9).

3. Disk brake according to claim 1, **characterized in that** the cleansing groove (11) has an inclination relative to a horizontal plane in the direction of the housing front side, where the friction lining carriers (9) are disposed, wherein a bottom of the cleansing groove (11) is more remote from the horizontal plane towards the housing front side.

4. Disk brake according to claim 1 or 3, **characterized in that** a cross-sectional area of the cleansing groove (11) is increasing continuously towards the housing front side.

5. Disk brake according to any of claims 1, 3 or 4, **characterized in that** the cleansing groove (11) is trough shaped.

6. Disk brake according to any of the preceding claims, **characterized in that** both housing halves (6, 7) together form the cleansing channel (10), and **in that**, in the vicinity of the receiving jaw (8), in each of the two housing halves (6, 7) a respective cleansing groove is provided.

7. Disk brake according to claim 6, **characterized in that** both cleansing grooves (11) are designed with mirror symmetry to a horizontal separating plane of the housing halves (6, 7) and each provided with a respective inclination.

## Revendications

1. Frein à disque pour un anneau de disque de freinage (4) d'un entraînement azimutal d'une installation éolienne, comprenant un boîtier de frein qui présente deux moitiés de boîtier (6, 7) encadrant une mâchoire de réception (8) pour l'anneau de disque de freinage (4) aux côtés opposés, dans lequel au moins deux pistons de frein sont montés dans chaque moitié de boîtier (6, 7), lesdits pistons pressurant hydrauliquement des supports de garniture de friction (9) associés à la mâchoire de réception (8), dans lequel au moins une moitié de boîtier (7) présente un canal de nettoyage (10) s'étendant d'un côté arrière du boîtier vers une zone frontale du boîtier où la mâchoire de réception (8) et les supports de garniture de friction (9) sont prévus,
**caractérisé en ce que**
le canal de nettoyage (10), à proximité de la mâchoire de réception (8), se prolonge dans une rainure de nettoyage (11), la rainure étant ouverte vers un côté frontal du boîtier.

2. Frein à disque selon la revendication 1, **caractérisé en ce que** le canal de nettoyage (10) est prévu en alignement avec au moins une nervure centrale (12) entre deux supports de garniture de friction (9) adjacents respectifs.

3. Frein à disque selon la revendication 1, **caractérisé en ce que** la rainure de nettoyage (11) présente, dans la direction du côté frontal du boîtier, une inclinaison par rapport à un plan horizontal où les supports de garniture de friction (9) sont disposés, dans lequel un fond de la rainure de nettoyage (11) s'écarte du plan horizontal vers le côté frontal du boîtier.

4. Frein à disque selon la revendication 1 ou 3, **caractérisé en ce qu'**une section transversale de la rainure de nettoyage (11) augmente continuellement vers le côté frontal du boîtier.

5. Frein à disque selon l'une quelconque des revendications 1, 3 ou 4, **caractérisé en ce que** la rainure de nettoyage (11) est configurée sous forme de rigole.

6. Frein à disque selon l'une quelconque des revendications précédentes, **caractérisé en ce que** les deux moitiés de boîtier (6, 7) ensemble forment le canal de nettoyage (10), et **en ce que**, à proximité de la mâchoire de réception (8), dans chacun des deux moitiés de boîtier (6, 7) une rainure de nettoyage respective est prévue.

7. Frein à disque selon la revendication 6, **caractérisé en ce que** les deux rainures de nettoyage (11) sont configurées dans une symétrie miroir par rapport à un plan de séparation horizontal des moitiés de boîtier (6, 7) et chacune présente une inclinaison.
